# EUROPEAN PATENT APPLICATION

(11) **EP 4 838 837 A1**
(43) Date of publication of application: **11.11.2026**
(21) Application number: 26175415.4
(22) Date of filing: 29.04.2026
(51) Int. Cl.: H04L 9/40, G06F 21/57

(54) **DEPLOYING ENDPOINT DETECTION AND RESPONSE AGENTS BASED ON AUTONOMOUS PENTEST INFORMATION**

(30) Priority: 07.05.2025 US 202519200869
(71) Applicant: Horizon 3 AI, Inc., Dover, Delaware 19901 (US)
(72) Inventor: HORSEMAN, James Walter, Dover, DE, 19901 (US); HANLEY, Zachary Daniel, Dover, DE, 19901 (US); SUNKAVALLY, Naveen Naga, Dover, DE, 19901 (US); ANTANI, Snehal, Dover, DE, 19901 (US)
(74) Representative: Patentship Patentanwaltsgesellschaft mbH

(57) **Abstract**

An autonomous pentesting agent (105) may execute an autonomous pentest (405) of a network, including performing (420) autonomous pentesting operations along an attack path (430) and accessing one or more endpoints (410) of multiple endpoints of the network via the attack path (430). The agent (105) may perform a deployment assessment procedure (440) on the one or more endpoints (410) accessed via the attack path (430). The procedure (440) may include identifying, for an endpoint (410) of the one or more endpoints (410), parameters of the endpoint (410), attributes of an environment surrounding the endpoint (410), and a complexity level associated with accessing the endpoint (410) via the autonomous pentesting operations along the attack path (430). The agent (105) may deploy, based on the procedure (440), an endpoint detection and response (EDR) agent (445) at the endpoint (410). The EDR agent (445) may have an aggressiveness configured in accordance with the parameters of the endpoint (410), the attributes of the environment surrounding the endpoint (410), and the complexity level associated with accessing the endpoint (410).

## Description

### BACKGROUND

In networking, penetration testing or "pentesting" refers to conducting security operations that simulate a cybersecurity attack in order to identify vulnerabilities in a network. The goal of pentesting is to mimic the actions of a malicious actor and discover loopholes or other vulnerabilities before they can be exploited. Pentesting may include techniques such as scanning for vulnerabilities, testing system configurations and security protocols, and attempting controlled attacks to evaluate defense mechanisms within a network. Network administrators can remediate vulnerabilities uncovered during pentesting to prevent malicious actors from compromising network security using those vulnerabilities. Practicing regular pentesting can aid in maintaining high security standards, protecting sensitive data, and ensuring the continuity of network services.

### SUMMARY

The described techniques relate to improved methods, systems, devices, and apparatuses that support deploying endpoint detection and response (EDR) agents based on autonomous pentest information.

In some aspects, the techniques described herein relate to a method for autonomous pentesting, including: executing an autonomous pentest of a network, wherein executing the autonomous pentest includes: performing one or more autonomous pentesting operations along an attack path; and accessing one or more endpoints of a plurality of endpoints of the network via the attack path; performing a deployment assessment procedure on the one or more endpoints accessed via the attack path, wherein performing the deployment assessment procedure includes: identifying, for an endpoint of the one or more endpoints, one or more parameters of the endpoint, one or more attributes of an environment surrounding the endpoint, and a complexity level associated with accessing the endpoint via the one or more autonomous pentesting operations along the attack path; and deploying, based at least in part on the deployment assessment procedure, an EDR agent at the endpoint, the EDR agent having an aggressiveness that is configured in accordance with the one or more parameters of the endpoint, the one or more attributes of the environment surrounding the endpoint, and the complexity level associated with accessing the endpoint.

In some aspects, the techniques described herein relate to an apparatus for autonomous pentesting, including: one or more memories storing processor-executable code; and one or more processors coupled with the one or more memories and individually or collectively operable to execute the code to cause the apparatus to: execute an autonomous pentest of a network, wherein, to execute the autonomous pentest, the one or more processors are configured to cause the apparatus to: perform one or more autonomous pentesting operations along an attack path; and access one or more endpoints of a plurality of endpoints of the network via the attack path; perform a deployment assessment procedure on the one or more endpoints accessed via the attack path, wherein, to perform the deployment assessment procedure, the one or more processors are configured to cause the apparatus to: identify, for an endpoint of the one or more endpoints, one or more parameters of the endpoint, one or more attributes of an environment surrounding the endpoint, and a complexity level associated with accessing the endpoint via the one or more autonomous pentesting operations along the attack path; and deploy, based at least in part on the deployment assessment procedure, an EDR agent at the endpoint, the EDR agent having an aggressiveness that is configured in accordance with the one or more parameters of the endpoint, the one or more attributes of the environment surrounding the endpoint, and the complexity level associated with accessing the endpoint.

In some aspects, the techniques described herein relate to a non-transitory computer-readable medium storing code for autonomous pentesting, the code including instructions executable by one or more processors to: execute an autonomous pentest of a network, wherein, to execute the autonomous pentest, the instructions are executable by the one or more processors to: perform one or more autonomous pentesting operations along an attack path; and access one or more endpoints of a plurality of endpoints of the network via the attack path; perform a deployment assessment procedure on the one or more endpoints accessed via the attack path, wherein, to perform the deployment assessment procedure, the instructions are executable by the one or more processors to: identify, for an endpoint of the one or more endpoints, one or more parameters of the endpoint, one or more attributes of an environment surrounding the endpoint, and a complexity level associated with accessing the endpoint via the one or more autonomous pentesting operations along the attack path; and deploy, based at least in part on the deployment assessment procedure, an EDR agent at the endpoint, the EDR agent having an aggressiveness that is configured in accordance with the one or more parameters of the endpoint, the one or more attributes of the environment surrounding the endpoint, and the complexity level associated with accessing the endpoint.

### BRIEF DESCRIPTION OF THE DRAWINGS

FIG. 1 shows an example of a computing environment that supports deploying endpoint detection and response (EDR) agents based on autonomous pentest information in accordance with aspects of the present disclosure.
FIG. 2 shows an example of an autonomous pentest map that supports deploying EDR agents based on autonomous pentest information in accordance with aspects of the present disclosure.
FIG. 3 shows an example of a computing environment that supports deploying EDR agents based on autonomous pentest information in accordance with aspects of the present disclosure.
FIGs. 4 and 5 show examples of pentesting flow diagrams that support deploying EDR agents based on autonomous pentest information in accordance with aspects of the present disclosure.
FIG. 6 shows a diagram of a system including a device that supports deploying EDR agents based on autonomous pentest information in accordance with aspects of the present disclosure.
FIG. 7 shows a flowchart illustrating methods that support deploying EDR agents based on autonomous pentest information in accordance with aspects of the present disclosure.

### DETAILED DESCRIPTION

Some networks may include endpoint detection and response (EDR) systems. An EDR system (also referred to herein as EDR infrastructure) may record and store behaviors of one or more endpoints of a network, detect security threats based on such behaviors, block malicious activity, and generate or suggest remediation actions. In other words, the EDR system may detect and respond to security threats at one or more endpoints of a network. An EDR system may include one or more EDR agents, which may refer to an entity configured to monitor behaviors of an endpoint, block malicious activity at that endpoint, and communicate with a management console of the EDR system. Accordingly, an EDR system may include a management console and multiple EDR agents deployed at different endpoints of a network that report back to the management console. An endpoint may refer to a physical or virtual device connected to a network and functioning as a starting or ending point for data communications. For example, an endpoint may be a mobile device, desktop computer, virtual machine, embedded device, server, or a component thereof having a communicative connection to the network.

In some cases, the EDR system may be manually configured and/or deployed. That is, a user of the network or a security team may manually tune EDR agents, select endpoints to which the EDR agents are to be deployed, and install the EDR agents. However, manually configuring and deploying EDR agents may lead to misconfigurations, incomplete coverage, and degraded user experience. For example, a security team may fail to select endpoints for EDR deployment based on probable attack patterns, leaving endpoints vulnerable to attack while utilizing resources on endpoints unlikely to be subject to malicious activity. Additionally, or alternatively, the security team may not effectively tune an EDR agent based on the features of an endpoint to which it is deployed, such as restricting processes on an endpoint used by a high volume of users in the network and delaying workflows.

As described herein, an autonomous pentesting agent may deploy one or more EDR agents to endpoints of a network based on information obtained via autonomous pentesting. For example, the autonomous pentesting agent may access endpoints during an attack path and gather information about each endpoint, including parameters of the endpoint (the type of device, frequency and/or type of data traffic, etc.), attributes of the environment surrounding the endpoint (e.g., connected or accessible network assets), and a complexity level associated with accessing the endpoint (e.g., complexity of an attack path to the endpoint). Based on the information, the autonomous pentesting agent may determine whether to deploy an EDR agent to the endpoint and, if so, a corresponding aggression level of the EDR agent. For example, the autonomous pentesting agent may deploy an EDR agent to an endpoint compromised during the autonomous pentest and tune the aggression level of the EDR agent to block processes corresponding to those of the attack used to compromise the endpoint. The autonomous pentesting agent may deploy the EDR agent to the endpoint using the same access technique as the autonomous pentest. That is, if the autonomous pentesting agent compromises the endpoint via a compromised credential, the autonomous pentesting agent may use capabilities of a user account associated with the compromised credential to install the EDR agent at the endpoint. By deploying EDR agents in accordance with information obtained during pentesting, the autonomous pentesting agent may improve the ability of the EDR agents to detect and block malicious activity in the network.

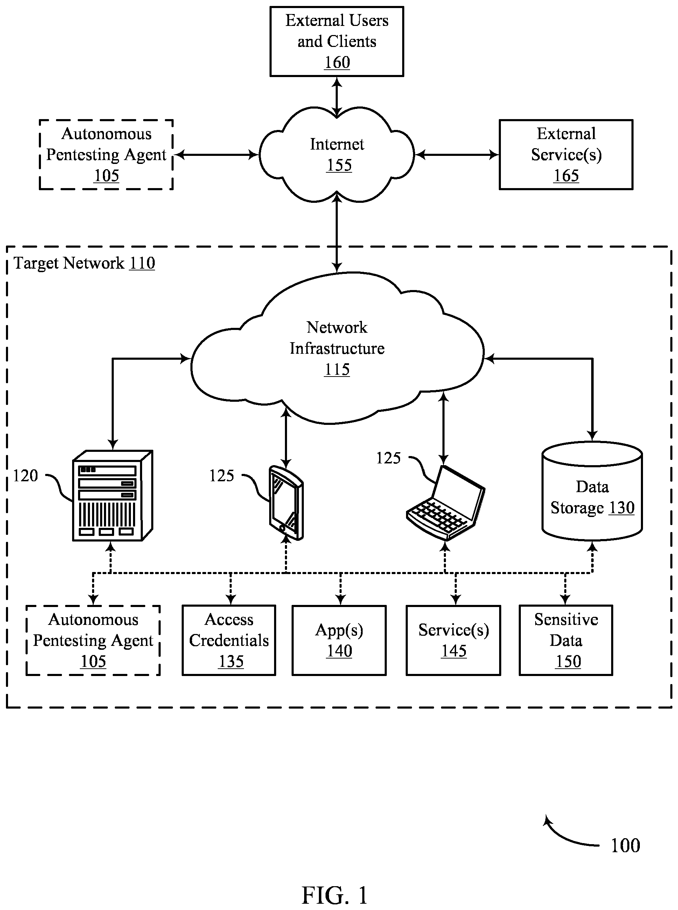

**FIG.** 1 illustrates an example of a computing environment 100 that supports deploying EDR agents based on autonomous pentest information in accordance with aspects of the present disclosure.

The computing environment 100 may include an autonomous pentesting agent 105 that performs an autonomous pentest of a target network 110. The target network 110 may include one or more devices or systems, such as a network infrastructure 115, server 120, computing devices 125, data storage 130, or any combination thereof. The devices or systems of the target network 110 may be configured to access or provide various network information and services, such as access credentials 135, app(s) 140, service(s) 145, sensitive data 150, or any combination thereof.

The target network 110 may allow the server 120, the computing devices 125, and the data storage 130 to communicate (e.g., exchange information) with one another. For example, the network infrastructure 115 may include any quantity of communications links and any quantity of hubs, bridges, routers, switches, ports, or other physical or logical network components that support communication between the server 120, computing devices 125, and data storage 130 of the target network 110 as well as communication between the target network 110 (e.g., the private network) and the Internet 155 or other external network (outside the target network 110, beyond a firewall associated with the target network 110, etc.). The target network 110 may include aspects of one or more wired networks, one or more wireless networks (e.g., cellular networks, Wi-Fi networks), or any combination thereof. The target network 110 may include aspects of one or more public networks or private networks, as well as secured or unsecured networks, or any combination thereof. For example, the target network 110 may be an example of a private network that includes one or more public-facing or external assets that are accessible via the Internet 155. As an example, the Internet 155 may refer to the world wide web, and users (e.g., external users and clients 160), may access the target network 110 via the Internet 155 through a website or application that is accessible or available via the Internet 155. For instance, the external users and clients 160, the external service(s) 165, or both may access network information and services via the Internet 155, including the access credentials 135, app(s) 140, service(s) 145, and sensitive data 150.

The target network 110 may be, or may be part of, a domain, such as a private domain associated with an organization, company, client, business, etc., defining an administrative boundary of the target network 110. The domain may include components such as computing devices 125, the server 120, etc., along with associated users (e.g., access credentials 135) and service(s) 145 that are governed or configured by one or more domain controllers and operate in accordance with policies that are put in place and managed by the one or more domain controllers. The domain may be divided into multiple subdomains or groups containing respective subsets of components, users (e.g., access credentials 135), and service(s) 145 that operate in accordance with a respective policy (e.g., group policy).

The target network 110 may be accessible via one or more hosts. For example, hosts may be examples of real or virtual machines that are connected to and capable of accessing the target network 110. Real machines may refer to machines having or made up of hardware components including a central processing unit (CPU), memory, hard drive, or the like, such as physical or tangible computers or servers (e.g., the server 120, the computing devices 125, etc.). Virtual machines may refer to software within or running on a physical computer or server using portions of the CPU, memory, hard drive, or the like of the physical computer or server. A physical computer or server may include or support multiple virtual machines, such as multiple tenants (e.g., in a multi-tenant environment). The server 120 and the computing devices 125 may be examples of hosts. Hosts may communicate data with other devices within the target network 110 and outside of the network (e.g., with devices accessible via the Internet 155). For example, the server 120 may send data to and receive data from one or more of the computing devices 125. Additionally, or alternatively, hosts may access resources of the target network 110, including the access credentials 135, app(s) 140, service(s) 145, or sensitive data 150. As used herein, hosts may refer to web hosts, cloud hosts, virtual hosts, remote hosts, or the like.

Hosts may be examples of and include network assets. For example, a host may be an example of a type of network asset that has access to other network assets, such as applications, services, and resources. As used herein, network assets refer to data, devices, or components of the target network 110, including data, software, and hardware. In some examples, network assets may refer to machines that include network shares. For example, network assets may be examples of machines (e.g., real or virtual machines) that include shares of the target network 110, such as file sharing systems. Network assets may be obtained and utilized by attackers to compromise the target network 110. In some cases, network assets may refer to network entities (e.g., system hosts or machines) that have internet protocol (IP) addresses and may be discovered during scans. The server 120, the computing devices 125 (e.g., laptops, desktops, mobile devices, smart vehicles, wearables), the data storage 130, and the access credentials 135, app(s) 140, service(s) 145, cookies, encryption and decryption keys, tokens, and sensitive data 150 accessible via the devices and systems of the target network 110 may all be examples of network assets. Other examples of network assets include virtual machines, printers, Internet-of-Things (IoT) devices, switches, routers, access points, endpoints, public static IPs, Lambdas and serverless architectures, Amazon Web Service (AWS) containers, and Kubernetes pods and other containerized applications. For example, physical devices (e.g., servers, computing devices, data storage) and systems may be considered network assets as well as information, apps, and services accessible through physical devices and systems of the target network 110.

Hosts may store, provide, or implement access credentials 135, app(s) 140, service(s) 145, sensitive data 150, or any combination thereof. In some cases, computing devices 125 on the network may access the one or more network assets (credentials 135, app(s) 140, service(s) 145, sensitive data 150, etc.) via the server 120 (e.g., via a host). Additionally, or alternatively, computing devices 125 may locally store or otherwise access one or more network assets of the target network 110. For example, users of the target network 110 may access app(s) 140 and service(s) 145 via the computing devices 125 directly or indirectly (e.g., via a connection between the computing devices 125 and the server 120).

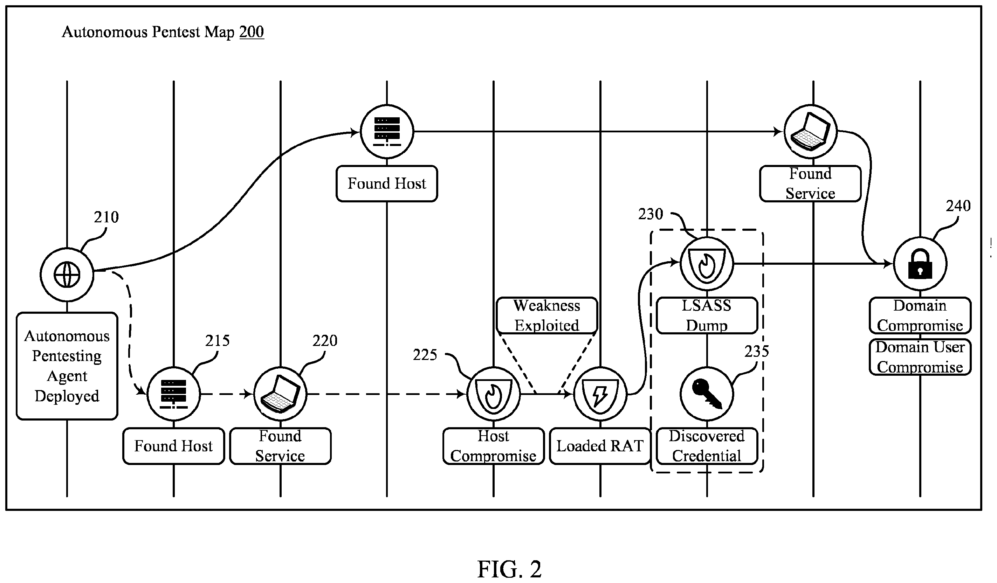

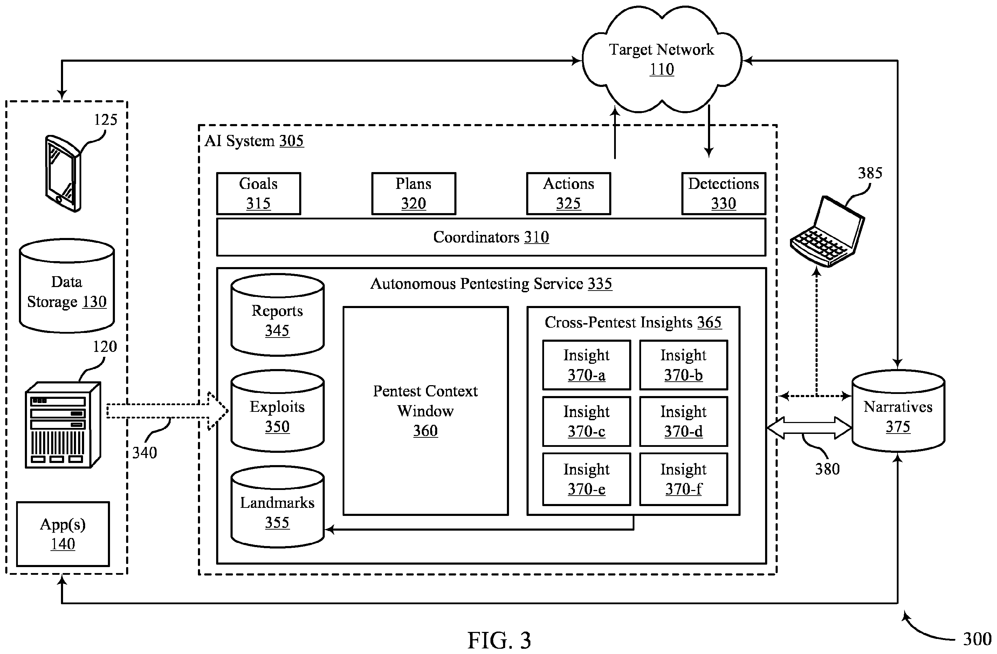

The autonomous pentesting agent 105 may perform a pentest of the target network 110. As used herein, a penetration test or a "pentest" may refer to the performance of one or more security operations that simulate a cybersecurity attack in order to identify vulnerabilities in the target network 110. The autonomous pentesting agent 105 may perform the pentest of the target network 110 using one or more artificial intelligence (AI) models. For example, the autonomous pentesting agent 105 may be "autonomous" in that the autonomous pentesting agent 105 may perform the pentest without hard-coding (e.g., deterministic coding), user inputs, or the like and, instead, by using the one or more AI models. The autonomous pentesting agent 105 may identify, via the pentest, security vulnerabilities of the target network 110. An example of an output of the pentest may be described in greater detail elsewhere herein, including with reference to FIGs. 2 and 3.

The autonomous pentesting agent 105 may, via the one or more AI models, determine and implement an attack path for a pentest. For example, the autonomous pentesting agent 105 may identify or select an asset of the target network 110 to attempt to access initially and, from that asset, another asset to attempt to access, and so on. In other words, the autonomous pentesting agent 105 may use the one or more AI models to generate (e.g., output) decisions or operations that mimic those of a potential cyber attacker. The one or more AI models may output a targeted asset of the target network 110 to be subject to an access attempt by the autonomous pentesting agent 105 based on inputs and relevant context of various assets in the target network 110. For instance, the one or more AI models may output targeted assets based on the relative position of assets within the target network 110, asset types, downstream assets (e.g., accessible after or through accessing a targeted asset), or the like.

The one or more AI models may be trained using data of previous pentests of the target network 110 or other networks. For example, an autonomous pentesting service that deploys the autonomous pentesting agent 105 may train one or more AI models used by the autonomous pentesting agent 105 using tactics, techniques, and procedures (TTPs) of attackers (e.g., human or automated pentests), autonomous pentests performed on the target network 110 previously, on other networks, or both. The autonomous pentesting agent 105 may perform improved pentests after the one or more AI models are trained using previous pentests of the target network 110. That is, as the autonomous pentesting agent 105 learns more about the target network 110, the autonomous pentesting agent 105 may perform pentests with higher performance levels (higher accuracy, higher quantities of potential attack paths, etc.).

In some cases, the pentest may be initiated internal (e.g., within) or external to (e.g., outside of a firewall) the target network 110. For example, the autonomous pentesting agent 105 may be deployed at a host device of the target network 110 (e.g., deployed to the server 120 or computing devices 125). In such cases, the autonomous pentesting agent 105 may perform the pentest as an internal user of the target network 110. Such internal pentests may be indicative of or emulate internal security threats to the network, such as from employees of an organization or an attacker that has otherwise access to the target network 110 internally or to a user of the target network 110. Alternatively, the autonomous pentesting agent 105 may be deployed at the Internet 155. For example, the autonomous pentesting agent 105 may perform the pentest as an external user of the target network 110, such as by accessing external or public-facing assets of the target network 110 on the Internet 155. In some examples, the autonomous pentesting agent 105 may be deployed via a runner. For example, a runner may be an executable process, script, or sequence, which enables automated deployment of a container (e.g., a Docker container). A container may refer to an executable package of software including code, runtime, system tools, system libraries, settings, and other components to run an application. The runner and the container may allow a user to provision and deploy pentests from a portal without manually running a launch script for the autonomous pentesting agent 105 (such as in accordance with a pentest schedule).

By performing the pentest autonomously via the autonomous pentesting agent 105, techniques described herein may support improved performance related to speed, identification of security vulnerabilities, and provision of remediation measures. For example, the pentest, when performed autonomously using the autonomous pentesting agent 105, may support improved performance and, by extension, improved security of the target network 110 against cybersecurity attacks relative to hard-coded (e.g., deterministic) or manual (e.g., human operated) pentests.

As described herein, the autonomous pentesting agent 105 may perform an autonomous pentest of the target network 110 and, based on information obtained during the pentest, deploy EDR agents. For example, the autonomous pentesting agent 105 may access endpoints-such as the server 120 and the computing devices 125, among other examples-during an autonomous pentest of the target network 110. The autonomous pentesting agent 105 may assess whether to deploy an EDR agent to the endpoints based on information associated with the endpoints obtained during pentesting. For example, the autonomous pentesting agent 105 may determine whether to deploy an EDR agent to an endpoint by performing a deployment assessment procedure. The deployment assessment procedure may include identifying parameters of the endpoint, attributes of the environment surrounding the endpoint, and a complexity level associated with accessing the endpoint. The autonomous pentesting agent 105 may also use the information associated with the endpoints obtained during pentesting to configure an EDR agent for the endpoint (if one is to be deployed). For example, the autonomous pentesting agent 105 may tune the aggression level of the EDR agent in accordance with the parameters of the endpoint, the attributes of the environment, and the complexity level associated with accessing the endpoint.

The autonomous pentesting agent 105 may deploy EDR agents having improved detection and prevention of malicious activity compared to manually deployed EDR agents. For example, the autonomous pentesting agent 105 may deploy EDR agents at endpoints where malicious attacks are more likely (e.g., endpoints compromised during a pentest). Additionally, the autonomous pentesting agent 105 may deploy EDR agents based on relative downstream impacts, thereby improving the resource efficiency of the EDR agents. As an example, the autonomous pentesting agent 105 may compromise a first endpoint, as well as second and third endpoints downstream from (e.g., accessible via) the first endpoint. Accordingly, the autonomous pentesting agent 105 may deploy an EDR agent to the first endpoint (e.g., rather than the second and third endpoints), which may enable the EDR system to detect malicious activity that may lead to an attack on the second and third endpoints. In other words, the autonomous pentesting agent 105 may deploy EDR agents based on probable attack patterns, and, therefore, may deploy EDR agents to endpoints more likely to be subject to attacks on the target network 110 (compared to manually deployed EDR agents).

Additionally, the autonomous pentesting agent 105 may deploy EDR agents configured in accordance with characteristics of an endpoint and its environment. For example, the autonomous pentesting agent 105 may configure a first EDR agent deployed to a first endpoint to block relatively fewer processes based on the first endpoint being at a developer workstation that hosts multiple interactive user sessions. That is, the autonomous pentesting agent 105 may configure the EDR agent such that the user sessions are minimally restricted, but indicators of malicious activity are blocked. Alternatively, the autonomous pentesting agent 105 may configure a second EDR agent deployed to a second endpoint to block relatively more processes based on the second endpoint being at a critical server that does not host interactive user sessions. Accordingly, the autonomous pentesting agent 105 may deploy EDR agents tuned according to their respective environments, ensuring that the EDR agents are effective in detecting and blocking malicious activity while maintaining usability for users of the target network 110 (e.g., not blocking non-malicious activity by users of the target network 110).

**FIG. 2** shows an example of an autonomous pentest map 200 that supports deploying EDR agents based on autonomous pentest information in accordance with aspects of the present disclosure.

The autonomous pentest map 200 may be an example of an output or result of an autonomous pentest performed by an autonomous pentesting agent, such as a pentest performed by the autonomous pentesting agent 105 in the target network 110 as described with reference to FIG. 1. The autonomous pentest map 200 may illustrate and describe an example of events of a pentest, including operations performed by and information obtained by the autonomous pentesting agent. The autonomous pentest map 200 in the example of FIG. 2 may illustrate a map after completion of a pentest, but in some examples, the autonomous pentesting service may display and update the autonomous pentest map 200 during a pentest as events occur. For example, the autonomous pentesting service may display a real-time view that provides real-time information and updates on the progress of a currently running pentest, including status updates for injected credentials.

The autonomous pentest map 200 may include one or more types of events. In some examples, the autonomous pentest map 200 may illustrate notable events, which may be events that did or would likely (e.g., in a real-time view) lead to a critical impact. For example, the autonomous pentest map 200 may include deployment 210 (e.g., of the autonomous pentesting agent), host identification 215, service identification 220, host compromise 225, deployment of an attacker tool 230 (e.g., a remote access tool (RAT), credential identification 235, and access 240 (e.g., to a domain, a domain user, or both). An attacker tool 230, such as a RAT, may refer to software that enables full control of a tech device remotely. RATs may have legitimate uses, such as technical support, but may also be controlled by attackers with malicious intent. In the context of the autonomous pentesting agent, a RAT may be used to provide the autonomous pentesting agent with additional access to further explore attack paths during operations.

The autonomous pentest map 200 includes one possible attack path including two attack branches that is generated based on an autonomous pentest. However, it is understood that any quantity of possible attack paths having any quantity of possible attack branches may be output from an autonomous pentest. In other words, the autonomous pentest map 200 may include one or more attack paths having one or more respective attack branches. In some cases, dozens, hundreds, or thousands of possible attack paths, branches, or both may be generated based on the autonomous pentest. Additionally, it is understood that while the autonomous pentest map 200 shown in FIG. 2 displays one example of an autonomous pentest for illustration, other maps including various different events, hosts, attack paths, and attack branches may result from various autonomous pentests.

In the example of the autonomous pentest map 200, the autonomous pentesting agent may identify an attack path having two attack branches. As used herein, attack "path" may be understood to refer to a series of events, set in motion by the autonomous pentest agent, that lead to a compromise of one or more components or assets of a network. In other words, an attack path may refer to the sequence of steps or actions an attacker or autonomous pentesting agent 105 may take to compromise a system or network. An attack path may involve identifying vulnerabilities and other weaknesses, exploiting them, and navigating through the target network 110 to access valuable information or resources. Additionally, "branches" or "chains" of an attack path may refer to one or more events occurring simultaneously or in parallel that lead to the compromise. As an example, in a first attack branch of the autonomous pentest map 200, the autonomous pentesting agent may identify a host, identify a service, and compromise the host (e.g., through the service). On the compromised host, the autonomous pentesting agent may exploit a weakness identified on the service running on the host to load a RAT and remotely control the compromised host. The autonomous pentesting agent may perform, via the RAT, a Local Security Authority Subsystem Service (LSASS) dump, allowing the autonomous pentesting agent to discover a credential. The autonomous pentesting agent may use the credential in a different branch of the attack path. For example, in a second attack branch of the autonomous pentest map 200, the autonomous pentesting agent may identify a host and, through the identified host, a service. The autonomous pentesting agent may use the discovered credentials (e.g., of the first attack branch) at the service (e.g., of the second attack branch to obtain access 240 to the domain, domain user, or both.

As used herein, a weakness may refer to a vulnerability or security flaw that may be exploited by an attacker to compromise a system or network. Weaknesses may include misconfigurations, outdated software, default credentials, or other vulnerabilities that may be leveraged to gain unauthorized access or perform malicious actions. Some vulnerabilities may be publicly known. For example, an N-day may be a software or hardware vulnerability that is already publicly known, (e.g., n days since disclosure, where n is a positive integer) but there may or may not be a security update available to remediate the vulnerability. Weaknesses, if exploited, may be associated with impacts. An impact may summarize, in business terms, the effects the autonomous pentesting agent was able to achieve as a result of exploiting weaknesses in an environment. An example of an impact may be a sensitive data exposure, which may indicate that the autonomous pentesting agent was able to potentially access sensitive information given the filetype or service that is compromised (e.g., business documents in file shares, Outlook personal storage table (PST) files, confluence remote code execution (RCE), exchange RCE, etc.).

An autonomous pentesting service may display the autonomous pentest map 200 such that compromised assets may be identified and security measures may be put in place. In some cases, the autonomous pentesting service may provide mitigation recommendations according to the autonomous pentest map 200. As an example, the autonomous pentest map 200 may identify a particular host or service as a security vulnerability for a network by tracing the access 240 backwards to a host identification 215 event. Accordingly, the autonomous pentesting service may provide a mitigation recommendation to be applied to the host involved in the host identification 215 event, such as according to how the host was identified or how access was obtained to the host at the host compromise 225 event. Similarly, the autonomous pentesting service may provide a mitigation recommendation to be applied to the service involved in the service identification 220 event.

The autonomous pentesting service may support deployment of EDR agents based on information obtained during autonomous pentesting. For example, the autonomous pentesting service may access endpoints during an autonomous pentest of a network and obtain information about the endpoints. The information may include parameters of the endpoint, attributes of the environment surrounding the endpoint, and a complexity level associated with accessing the endpoint. The autonomous pentesting service may determine whether to deploy an EDR agent to each endpoint accessed during the autonomous pentest based on the information. As an example, the autonomous pentesting service may deploy an EDR agent to the host involved in the host identification 215 event based on the host being compromised and in an attack path leading to domain compromise.

**FIG. 3** shows an example of a computing environment 300 that supports deploying EDR agents based on autonomous pentest information in accordance with aspects of the present disclosure.

The computing environment 300 may implement or be implemented by the computing environment 100, the autonomous pentest map 200, or both. For example, the computing environment 300 may include servers 120, computing devices 125, and app(s) 140 utilizing an AI system 305 to perform autonomous pentests.

In some examples, the AI system 305 may be a system designed to process data, learn from past experiences, and make determinations and predictions that mimic human cognitive functions (e.g., from the perspective of a potential cyber attacker). In some cases, the AI system 305 may implement or be implemented by one or more AI or machine learning (ML) models (e.g., AI/ML models). In some examples, an AI/ML model of the AI system 305 may be a supervised learning model configured to learn from labeled training data to generate predictions on inputs. In some other examples, an AI/ML model of the AI system 305 may be an unsupervised learning model that is configured to discover patterns in unlabeled data to generate predictions on inputs. In another example, the AI system 305 may implement reinforcement learning models that are configured to learn behaviors through trial- and-error (e.g., via experimentation). Additionally, or alternatively, the AI system 305 may implement neural networks (e.g., artificial neural networks (ANNs)) that include one or more layers configured to process information via a series of mathematical transformations.

Deep learning models may be a subset of neural networks designed and configured for tasks such as computer vision and natural language processing and may be used by the AI system 305. In some examples, the AI system 305 may utilize a large language model (LLM) which utilizes a neural network architecture to process, understand, and generate natural language. For example, LLMs may be trained on a relatively large corpus of data (e.g., text data, image data, audio data, video data, among others) to perform natural language processing tasks such as text generation, translation, summarization, responding to natural language queries, data generation, or any combination thereof.

The AI system 305 may be an agentic AI system, meaning that the AI system 305 may act autonomously (e.g., through the use of AI agents), at least for some operations, to achieve specified goals, make decisions, and take actions without direct human intervention. In some cases, the AI system 305 may be an agentic AI system with limited human involvement where the AI system 305 may request human guidance or user input only in certain circumstances, such as if the AI system 305 is unable to make a decision or perform a subsequent operation. Further, the AI system 305 may use one or more AI/ML models to set and pursue goals 315 without those goals 315 being specifically defined by human input to the AI system 305. The AI system 305 may further generate plans 320 and execute sequences of actions 325 to achieve those goals 315 and adapt future behavior in accordance with real-time observations and feedback about the effectiveness of the actions 325 to achieve the desired outcomes or meet targets.

For example, in some cases, utilizing one or more AI/ML models, the AI system 305 may include an autonomous pentesting service 335 and may interface with one or more coordinators 310 that coordinate goals 315 and plans 320, actions 325, and detections 330 for achieving the goals 315. For example, for autonomous pentesting, the goals 315 of the AI system 305 may be to obtain access to data stored within a target network 110, compromise (such as by obtaining unauthorized access or deploying unauthorized software to) a domain or a network asset of the target network 110, or any combination thereof. To obtain the goals 315, the AI system 305 may generate one or more plans 320 that are based on actions 325 and detections 330. For example, to determine a next action within a defined set of guardrails or instructions, the AI system 305 may generate a plan 320 that can include an action 325 to invoke (e.g., execute) one or more commands on a target network 110 to obtain a detection 330 from the target network 110.

In some examples, the target network 110 may include one or more network assets such as servers 120, computing devices 125, data storages 130, app(s) 140, or any combination thereof. Further, obtaining a detection 330 from the target network 110 may include the AI system 305 retrieving telemetry data from the one or more network assets of the target network 110. In some cases, telemetry data obtained from the target network 110 may include logs, traces, metrics, events, or any combination thereof from the one or more network assets of the target network 110. For example, a detection 330 may include some data that is obtained from the target network 110 via an autonomous pentest that aids the AI system 305 in achieving the goals 315. In one example, the detection 330 may include an autonomous pentest obtaining a credential that is used to gain unauthorized access to a network asset, which may be an example of one of the goals 315. In another example, a detection 330 may be the autonomous pentest detecting a set of patterns of events indicated within logs of the target network 110, which may be utilized for achieving a respective goal 315. For example, a goal 315 may be to perform a successful credential compromise attack to gain unauthorized access to a network asset and a detection 330 may indicate information to aid an autonomous pentesting agent in performing the credential compromise attack.

In some examples, the AI system 305 may also interface with the coordinators 310 to perform autonomous pentests as described elsewhere herein, such as with reference to FIGs. 1 and 2. When performing autonomous pentests, the AI system 305 may collect and store a relatively large quantity (such as thousands, millions, billions, or trillions) of training data points or tokens for the AI system 305 to perform subsequent autonomous pentests. For example, each action 325 (e.g., command) executed via the AI system 305 may result in a collection of a relatively large quantity of training data points that indicate whether the action 325 succeeded or failed, why the action 325 succeeded or failed, which software, policies, or tools were used to execute the action 325 that resulted in the action 325 succeeding or failing, or any combination thereof. Therefore, the AI system 305 may continuously obtain and update the training data used for training AI/ML models and perform reinforcement learning using collective intelligence to improve the weights and training of the AI/ML models.

In some examples, the training data for the AI system 305 may include telemetry data obtained from the target network 110, data obtained from servers 120, computing devices 125, and app(s) 140 via a developer pipeline 340, or both. In some cases, the training data may include indications of reports 345, exploits 350, and landmarks 355. A report 345 may indicate outputs or artifacts generated by the AI system 305 to document the discoveries, vulnerabilities, and results of an autonomous pentest. An exploit 350 may indicate the tools, techniques, operations, programs, code, and the like utilized by the AI system 305 to perform an autonomous pentest. A landmark 355 may indicate a point or marker within a network (e.g., the target network 110) to assist the AI system 305 to navigate and map an environment of the target network 110 during an autonomous pentest.

In some examples, the AI system 305 may obtain the reports 345, exploits 350, and landmarks 355 based on performing one or more autonomous pentests. In another example, one or more users (e.g., developers) may manually generate the reports 345, exploits 350, and landmarks 355 for training the AI system 305. In such cases, the one or more users may generate the data for the reports 345, exploits 350, and landmarks 355 and label the data for the AI system 305. Additionally, or alternatively, one or more users may utilize an LLM to generate the reports 345, exploits 350, and landmarks 355. For example, a user may prompt an LLM to generate the reports 345, exploits 350, and landmarks 355 by providing the LLM with a set of input parameters that indicate a scope, objectives, and constraints of an autonomous pentest. In some examples, the LLM prompt to generate the reports 345, exploits 350, and landmarks 355 may be a natural language prompt that includes instructions that indicates characteristics of the target network 110, testing protocols, compliance requirements, or any combination thereof. The LLM may then process the prompt and generate the reports 345, exploits 350, and landmarks 355 for training the AI system 305.

Utilizing the reports 345, exploits 350, and landmarks 355, the AI system 305 may perform one or more autonomous pentests by maintaining awareness of the current testing state and progress through a pentest context window 360. The pentest context window 360 may process information about ongoing pentesting operations, including successfully exploited vulnerabilities, accessed systems and data, attempted but failed exploit paths, attack paths, among others.

The AI system 305 may analyze contextual information obtained from performing autonomous pentests to generate cross-pentest insights 365 that can be applied across multiple pentesting operations. For example, as a result of training the AI system 305, one or more autonomous pentests, or both, the AI system 305 may generate a set of cross-pentest insights 365 that indicates one or more insights 370 (e.g., an insight 370-a, an insight 370-b, an insight 370-c, an insight 370-d, an insight 370-e, and an insight 370-f). For example, the insight 370-a may indicate patterns of vulnerable default configurations in software (e.g., commonly used enterprise or commercial software). In some other examples, the insight 370-b may indicate how compromised low-privilege user credentials can be leveraged to eventually gain domain admin access through privilege escalation techniques. Further, the insight 370-c and the insight 370-d may indicate common pathways where initial network access can lead to sensitive data exposure, such as finding unencrypted password files or accessing improperly secured cloud storage buckets. The insight 370-e may indicate recurring vulnerabilities in network segmentation that allow lateral movement between supposedly isolated systems. Additionally, or alternatively, the insight 370-f may indicate patterns where seemingly low-risk misconfigurations can be chained together to achieve relatively significant compromise of the target network 110. Therefore, the cross-pentest insights 365 may indicate one or more insights 370 that represent patterns and vulnerabilities that occur across different networks and testing scenarios, helping organizations better understand systemic security weaknesses and how to address such weaknesses. For example, the cross-pentest insights 365 may be added as landmarks 355 for further training the AI system 305 to perform autonomous pentests.

The cross-pentest insights 365 may be displayed to one or more computing devices 125, app(s) 140, or both to enable users to view and analyze the cross-pentest insights 365 to generate additional TTPs configured to achieve the goals 315 of the AI system 305. To display the cross-pentest insights 365 to one or more users, the AI system 305 may generate one or more narratives 375 that indicate the insights 370 obtained in response to one or more autonomous pentests. In some examples, to generate the one or more narratives 375, the AI system 305 may output (e.g., transmit) the cross-pentest insights 365 via a pipeline 380 connected to a separate AI/ML model (e.g., an LLM). For example, the AI system 305 may output the cross-pentest insights 365 to an LLM that is configured to generate the narratives 375 (e.g., the LLM is finetuned for text generation based on an input of the insights 370). In some cases, the narratives 375 may indicate detailed security postures for organizations, companies, tenants, users, groups of users, or any combination thereof. For example, a narrative 375 may be a compliance narrative that indicates one or more insights 370 about the security compliance of a target network 110. In another example, a narrative 375 may be a presentation for a company or organization that indicates the one or more vulnerabilities in a target network 110 associated with the company or organization. For example, the presentation can indicate the cross-pentest insights 365 obtained from performing one or more autonomous pentests on the target network 110 associated with the company or organization (e.g., the target network 110).

In some examples, users or devices external to the target network 110 may interact, communicate, or otherwise engage with the AI system 305 to configure pentesting parameters, perform pentesting operations on the target network 110, or analyze the results from a pentest on target network 110. For instance, a user such as a service provider for the AI system 305 may operate an external device 385 to provide information to the AI system 305 (e.g., to the coordinators 310), which identifies goals 315, plans 320, or actions 325 for pentesting the target network 110. Additionally, or alternatively, the AI system 305 may provide information, such as cross-pentest insights 365, to the external device 385. A user of the external device 385 may analyze the cross-pentest insights 365 to generate or modify narratives 375 corresponding to the results of the pentest on the target network 110. In some cases, an output of the LLM used to generate narratives 375 may be sent to the external device 385, and a user (e.g., a service provider) of the external device 385 may aggregate narratives 375 about the target network 110 for reporting or conveyance via the pentest context window 360. Alternatively, the user of the external device 385 may modify one or more narratives 375 based on goals 315, plans 320, detections 330, or other information such that the narratives 375 resulting from the pentest for the target network indicate the relevant and important information for identifying weaknesses and addressing vulnerabilities in the target network 110.

An autonomous pentesting service 335 may utilize the AI system 305 to determine whether to deploy EDR agents to endpoints accessed during autonomous pentests. For example, the autonomous pentesting service 335 may input information associated with the endpoints obtained during autonomous pentesting-including parameters of the endpoint, attributes of the environment surrounding the endpoint, and a complexity level associated with accessing the endpoint-to the AI system 305, and the AI system 305 may output an indication of which endpoints are recommended for EDR agent deployment.

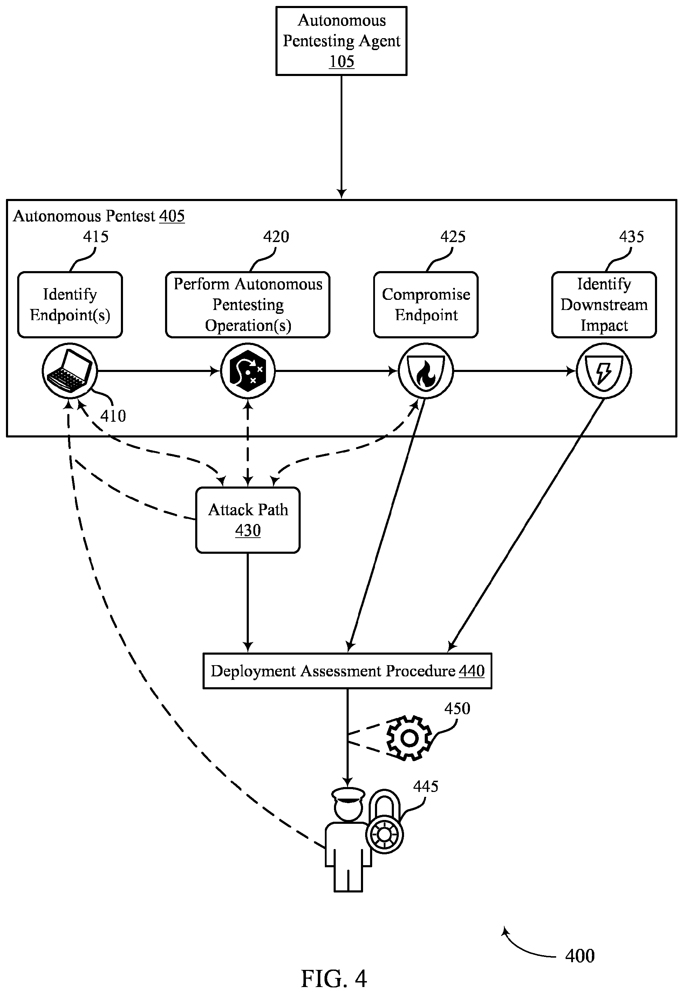

**FIG. 4** shows an example of a pentesting flow diagram 400 that supports deploying EDR agents based on autonomous pentest information in accordance with aspects of the present disclosure. The pentesting flow diagram 400 may implement or be implemented by the computing environment 100, the autonomous pentest map 200, the computing environment 300, or any combination thereof. For example, the pentesting flow diagram 400 may illustrate an autonomous pentest 405 performed by an autonomous pentesting agent 105 involving identification of an endpoint 410 and deployment of an EDR agent 445 to the endpoint 410.

The autonomous pentesting agent 105 may execute an autonomous pentest 405 on a network, such as the target network 110 described with reference to FIG. 1. The autonomous pentesting agent 105 may identify, enumerate, and exploit vulnerabilities in the network. For example, the autonomous pentesting agent 105 may identify endpoint(s) at 415, including an endpoint 410. As an example, the autonomous pentesting agent 105 may perform a scan of the network to identify one or more endpoints. The endpoint 410 may be an example of a network asset-such as a network asset described with reference to FIG. 1-that connects to and exchanges information with a network (such as a target network 110 as described herein). Endpoints may be examples of physical or virtual devices, including mobile devices, desktop computers, virtual machines, embedded devices, servers, IoT devices, or the like.

During the autonomous pentest 405, the autonomous pentesting agent 105 may perform autonomous pentesting operation(s) at 420 along an attack path 430. In some examples, the autonomous pentesting agent 105 may target the endpoint 410 via the autonomous pentesting operation(s). For example, the autonomous pentesting agent 105 may perform autonomous pentesting operation(s) along the attack path 430 and, via the autonomous pentesting operation(s), compromise the endpoint 410 at 425. As used herein, compromising the endpoint 410 may also be referred to as accessing (e.g., gaining unauthorized access to) the endpoint 410, data on the endpoint 410, services on the endpoint 410, or the like. In other words, the autonomous pentesting agent 105 may compromise the endpoint 410 by obtaining unauthorized access to the endpoint 410. The autonomous pentesting agent 105 may be capable of executing code at the endpoint 410 based on compromising the endpoint 410 at 425. In other words, once the endpoint 410 is compromised-such as through stolen credentials, lateral movement, or a remote code execution exploit-the autonomous pentesting agent 105 may gain the ability to run code on the endpoint 410. This capability may allow the autonomous pentesting agent 105 to perform operations including file system operations, configuration modification, or software installation-such as installation of an EDR agent 445-remotely and without user interaction.

In some examples, the autonomous pentesting agent 105 may access one or more other network assets based on the compromise of the endpoint 410 at 425. For example, the autonomous pentesting agent 105 may continue performing autonomous pentesting operation(s) along the attack path 430 after compromising the endpoint at 425. The autonomous pentesting agent 105 may access one or more other network assets and/or achieve one or more compromise events via the continued autonomous pentesting operation(s). The attack path 430 may be an example of the attack path included in the autonomous pentest map 200 described with reference to FIG. 2, where the attack continues after compromising an endpoint. For example, the autonomous pentesting service described with reference to FIG. 2 may continue to perform pentesting operations-including loading a RAT, performing an LSASS dump, discovering a credential, and achieving domain and domain user compromise-after the host compromise 225. In such examples, the endpoint 410 may be associated with a downstream impact 435. For example, the autonomous pentesting agent 105 may use the compromise of the endpoint 410 to compromise other network assets (e.g., perform lateral movement within the network), which may be referred to as the downstream impact 435 of the endpoint 410. The downstream impact 435 may be based on criticality (e.g., priority levels) of network assets accessible via the endpoint 410 and/or lateral movement potential from the endpoint 410.

The autonomous pentesting agent 105 may perform a deployment assessment procedure 440 based on the autonomous pentest 405. For example, the autonomous pentesting agent 105 may check whether the endpoint 410 compromised at 425 meets criteria associated with deploying an EDR agent 445 to the endpoint 410. That is, the deployment assessment procedure 440 may include a policy check or policy-based triggers associated with deploying EDR agents. For example, the autonomous pentesting agent may perform the deployment assessment procedure 440 according to a policy enforced by one or more domain controllers, which may be described in greater detail elsewhere herein, including with reference to FIG. 1. The autonomous pentesting agent 105 may receive one or more inputs indicating the policy associated with EDR deployment for the network. That is, the one or more inputs may indicate conditions of endpoints which, if met, trigger the autonomous pentesting agent 105 to deploy an EDR agent 445. The conditions may include one or more network asset types (e.g., domain controllers and/or database servers), segment(s) of the network (e.g., high-priority infrastructure segments including under-monitored endpoints), or a threshold quantity of compromise occurrences (e.g., endpoints repeatedly exploited across pentests). In other words, if endpoint 410 is a network asset type of the one or more network asset types, if the endpoint 410 is in the indicated segment(s) of the network, and/or if the endpoint 410 is compromised a threshold quantity of times, the autonomous pentesting agent 105 may deploy an EDR agent 445 to the endpoint 410.

Additionally, or alternatively, the deployment assessment procedure 440 may include a risk-based assessment. That is, the autonomous pentesting agent 105 may identify whether the endpoint 410 is likely to be compromised by an attacker, such as based on whether the endpoint 410 was compromised during the autonomous pentest 405, the complexity of the attack path 430 including compromise of the endpoint 410 (if applicable), the downstream impact 435 of the endpoint 410, or a combination thereof. For example, the endpoint 410 may be likely to be compromised by an attacker based on a misconfiguration or other vulnerability associated with the endpoint 410. A misconfiguration may refer to an error in a configuration of an existing EDR component at the endpoint that causes the EDR component to fail to detect the autonomous pentesting operation(s) by which the endpoint 410 is compromised. Additionally, or alternatively, a misconfiguration may refer to a user account having permissions that it is not intended to have or does not use, which may allow the user account to access more network assets within the target network than intended. That is, the autonomous pentesting agent 105 may perform a risk-based assessment (as part of the deployment assessment procedure 440) based on one or more vulnerabilities (e.g., including misconfigurations) associated with the endpoint 410, a likelihood of exploitation of those vulnerabilities, and a downstream impact 435 of exploitation of the endpoint 410.

The autonomous pentesting agent 105 may tune an aggressiveness (e.g., an aggression level) of the EDR agent 445 after the deployment assessment procedure 440. For example, the autonomous pentesting agent 105 may, after determining to deploy the EDR agent 445 to the endpoint 410, determine a configuration 450 of the EDR agent 445. The configuration may include an aggressiveness, which may refer to an amount or types of different processes blocked by the EDR agent 445 (e.g., a high aggressiveness involving blocking a relatively large amount or types of processes, and a low aggressiveness involving blocking a relatively low amount or types of processes). A type of process may refer to a type of communication routed in and out of the endpoint 410, processes related to different applications or services or types thereof, or the like. For example, the autonomous pentesting agent 105 may tune the aggressiveness to block all processes related to file sharing applications but not mail servers.

The autonomous pentesting agent 105 may tune the aggressiveness in accordance with information obtained via the autonomous pentest 405, including an environment of the endpoint 410. As an example, the autonomous pentesting agent 105 may configure a relatively high aggressiveness based on the endpoint 410 being a high-priority server that does not host interactive user sessions. That is, the autonomous pentesting agent 105 may apply a more restrictive configuration to the EDR agent 445 based on the endpoint 410 involving a relatively low amount (or no) user interaction and/or having a relatively high priority level. Alternatively, the autonomous pentesting agent 105 may configure a relatively low aggressiveness based on the endpoint 410 being a developer workstation that hosts multiple user sessions. That is, the autonomous pentesting agent 105 may apply a less restrictive configuration to the EDR agent 445 based on the endpoint 410 involving a relatively high amount of user interaction.

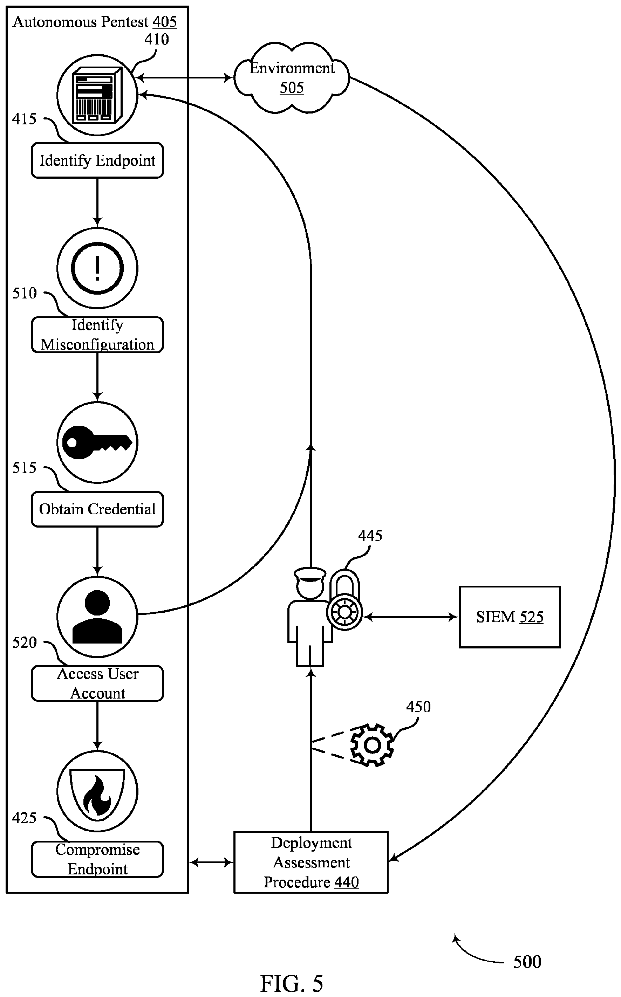

To deploy the EDR agent 445 at the endpoint 410, the autonomous pentesting agent 105 may use the attack path 430 by which the endpoint 410 was compromised. For example, the autonomous pentesting agent 105 may employ the same attack vectors used to gain initial access to the endpoint 410 to deploy the EDR agent 445. The attack vectors (and deployment techniques) may include remote code execution exploits, stolen or cracked credentials, and built-in OS tools-which may be referred to as "living-off-the-land" (LOL) techniques. For example, the autonomous pentesting agent 105 may identify domain or local administrator credentials during the autonomous pentest 405 and use the credentials along with a software deployment mechanism (e.g., built-in tools such as a Group Policy for Windows OSs, PowerShell, Windows Management Instrumentation (WMI), command line tools, or the like) or remote service creation available to domain or local administrator accounts) to install and configure the EDR agent 445. An example of using credentials obtained during the autonomous pentest 405 to deploy the EDR agent 445 is described in greater detail elsewhere herein, including with reference to FIG. 5. In another example, the autonomous pentesting agent 105 may use remote script execution to deploy the EDR agent 445. For example, the autonomous pentesting agent 105 may drop and execute an installer (e.g., a Microsoft Software Installer (MSI) or an executable (EXE) file) on the endpoint 410. Additionally, or alternatively, the autonomous pentesting agent 105 may integrate with enterprise security management consoles or application programming interfaces (APIs) of the network to initiate EDR deployment from a trusted central location.

The EDR agent 445 may be an example of an EDR agent that is configured to call back to a management console. That is, the EDR agent 445 may be one of multiple agents of an EDR system of the network. The EDR system may include a management console that communicates with and manages configurations of the multiple EDR agents. In other words, the EDR agent 445 may be a part of an EDR infrastructure or system associated with the network. In such examples, the autonomous pentesting agent 105 may integrate the EDR agent 445 with the EDR infrastructure when deploying the EDR agent 445. That is, the autonomous pentesting agent 105 may determine the configuration 450 of the EDR agent 445 in accordance with the EDR infrastructure. Additionally, or alternatively, the autonomous pentesting agent 105 may integrate the EDR agent 445 with one or more security platforms of the network, such as Security Information and Event Management (SIEM) platforms or Security Orchestration, Automation, and Response (SOAR) platforms. For example, the autonomous pentesting agent 105 may configure the EDR agent 445 to communicate logs and telemetry data with the one or more security platforms, which may enable real-time alerts, correlation of events, and automated remediation workflows in response to detected threats. The telemetry may include process creation logs, file access events, user authentication records, and network traffic metadata associated with threat detection.

In some examples, the autonomous pentesting agent 105 may configure the EDR agent 445 in a mode in accordance with the deployment assessment procedure 440 and/or a policy associated with EDR deployment. For example, the autonomous pentesting agent 105 may deploy the EDR agent 445 in a first mode in which the EDR agent 445 passively logs activity on the endpoint 410 without notifying a user associated with the endpoint 410. In such examples, the EDR agent 445 may be an example of a covert tripwire on the endpoint 410, passively logging evidence of ongoing or repeated compromise attempts. Alternatively, the autonomous pentesting agent 105 may deploy the EDR agent 445 in a second mode in which the user associated with the endpoint 410 is notified of installation of the EDR agent 445. In such examples, the EDR agent 445 may log activity, block suspicious processes, and transmit notifications about suspicious activity.

After deploying the EDR agent 445, the autonomous pentesting agent 105 may verify that the EDR agent 445 detects and/or blocks the attack path 430 by which the endpoint 410 was compromised during the autonomous pentest 405. For example, the autonomous pentesting agent 105 may perform another autonomous pentest (or subsequent pentesting operations during the same pentest) that targets the endpoint 410. The autonomous pentesting agent 105 may fail to compromise the endpoint 410 and, accordingly, validate the EDR agent 445 and/or the configuration 450 of the EDR agent 445. Alternatively, the autonomous pentesting agent 105 may compromise the endpoint 410 and, accordingly, modify the configuration 450 of the EDR agent 445 based on the compromise. In some examples, the autonomous pentesting agent 105 may target the endpoint 410 based on a record of the compromise event at 425, the attack path 430, the configuration 450 and/or deployment of the EDR agent 445. That is, the autonomous pentesting agent 105 may store a record of information associated with the EDR agent 445 deployed to the endpoint 410 and use the stored record in one or more subsequent pentests.

**FIG. 5** shows an example of a pentesting flow diagram 500 that supports deploying EDR agents based on autonomous pentest information in accordance with aspects of the present disclosure. The pentesting flow diagram 500 may implement or be implemented by the computing environment 100, the autonomous pentest map 200, the computing environment 300, the pentesting flow diagram 400, or any combination thereof. For example, the pentesting flow diagram 500 may illustrate an autonomous pentest 405 involving identification of an endpoint 410 and deployment of an EDR agent 445 to the endpoint 410.

An autonomous pentesting agent may execute an autonomous pentest 405 of a network. At 415, the autonomous pentest 405 may include identifying an endpoint 410 (e.g., a server). Additionally, at 510, the autonomous pentest 405 may include identifying a misconfiguration at the endpoint 410. For example, the autonomous pentesting agent may identify that an EDR agent at the endpoint 410 (e.g., prior to the autonomous pentest 405) includes a monitoring configuration that fails to detect one or more operations by the autonomous pentesting agent. The autonomous pentesting agent may, via the misconfiguration, obtain a credential at 515 and use the credential to access a user account at 520. Then, the autonomous pentesting agent may compromise the endpoint 410 at 425 based on accessing the user account.

After compromising the endpoint 410, the autonomous pentesting agent may perform a deployment assessment procedure 440. For example, the autonomous pentesting agent may determine whether the endpoint 410 satisfies a policy associated with EDR deployment in the network and/or identify a risk associated with the endpoint 410 (e.g., based on an environment 505 of the endpoint 410). The autonomous pentesting agent may determine that multiple network assets are accessible via the endpoint 410 and, accordingly, determine to deploy an EDR agent 445 to the endpoint 410.

The autonomous pentesting agent may deploy an EDR installer using management tools and the user account accessed at 520. For example, the user account may have a capability or privilege to install software on the endpoint 410, and the autonomous pentesting agent may use the capability to install software to install the EDR agent 445 at the endpoint 410. The autonomous pentesting agent may determine a configuration 450 associated with the EDR agent 445 based on the deployment assessment procedure 440. For example, the configuration 450 may include a relatively high aggression (e.g., block a relatively wide range or quantity of processes) based on the policy and/or the risk associated with the endpoint 410. Additionally, the autonomous pentesting agent may set the configuration 450 to integrate the EDR agent 445 with a SIEM 525 associated with the network. For example, the autonomous pentesting agent may configure the EDR agent 445 to communicate telemetry data with the SIEM 525, which may transmit alerts of suspicious activity to users of the network.

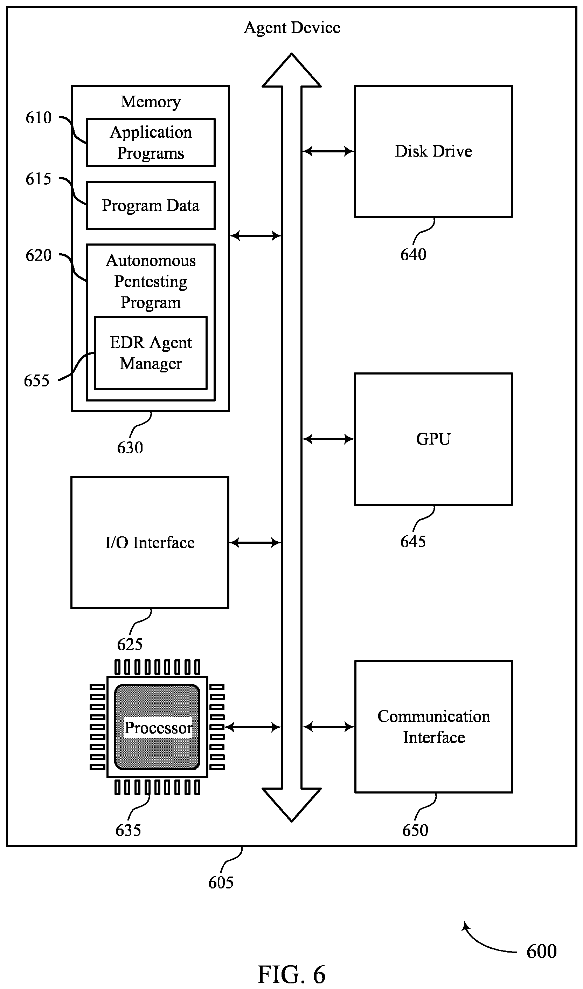

**FIG.** 6 shows a diagram of a system 600 including an agent device 605 that supports deploying EDR agents based on autonomous pentest information in accordance with aspects of the present disclosure. The agent device 605 may be an example of a device or server on which an autonomous pentesting agent 105 is deployed as described herein. The agent device 605 may include components for deploying EDR agents based on autonomous pentest information, such as a memory 630 including application programs 610, program data 615, an autonomous pentesting program 620, and a EDR agent manager 655; an input/output (I/O) interface 625; a processor 635; a disk drive 640; a graphics processing unit (GPU) 645; and a communication interface 650. Each of these components may communicate, directly or indirectly, with one another (e.g., via one or more buses, communications links, communications interfaces, or any combination thereof).

The I/O interface 625 may support connection of the agent device 605 with one or more other devices. For example, the agent device 605 may connect to keyboards, mice, printers, hard disks, or the like via the I/O interface 625. The I/O interface 625 may communicate with the processor 635. That is, the processor 635 may process signals from devices connected to the agent device 605 via the I/O interface 625.

Memory 630 may include RAM, ROM, or both. The memory 630 may store computer-readable, computer-executable software including instructions that, when executed, cause at least one processor 635 to perform various functions described herein, such as functions supporting deploying EDR agents based on autonomous pentest information. In some cases, the memory 630 may contain, among other things, a basic input/output system (BIOS), which may control basic hardware or software operation such as the interaction with peripheral components or devices. The memory 630 may be an example of a single memory or multiple memories. For example, the agent device 605 may include one or more memories 630.

The application programs 610 in the memory 630 may be examples of app(s) 140 as described with reference to FIG. 1. For example, the application programs 610 may be installed on the memory 630 of the agent device 605, among other devices in a network. The application programs 610 may be examples of software applications or computer programs that are implemented to carry out one or more functions or tasks.

The program data 615 may be data related to the application programs 610. Program data 615 may be an example of or refer to running data of programs and applications installed on the memory 630 of the agent device 605. In some examples, the program data 615 may include various data, including code that allows the application programs 610 to perform the one or more functions or tasks.

The processor 635 may include an intelligent hardware device, (e.g., a general-purpose processor, a digital signal processor (DSP), a CPU, a microcontroller, an application-specific integrated circuit (ASIC), a field programmable gate array (FPGA), a programmable logic device, a discrete gate or transistor logic component, a discrete hardware component, or any combination thereof). The processor 635 may be configured to execute computer-readable instructions stored in at least one memory 630 to perform various functions (e.g., functions or tasks supporting deploying EDR agents based on autonomous pentest information). Though a single processor 635 is depicted in the example of FIG. 6, it is to be understood that the system 600 may include any quantity of one or more of processors 635 and that a group of processors 635 may collectively perform one or more functions ascribed herein to a processor, such as the processor 635. The processor 635 may be an example of a single processor or multiple processors. For example, the agent device 605 may include one or more processors 635.

The disk drive 640 may be configured to store data that is generated, processed, stored, or otherwise used by the system 600. In some cases, the disk drive 640 may include one or more hard disk drives (HDDs), one or more solid-state drives (SSDs), or both. In some examples, the disk drive 640 may be an example of a single database, a distributed database, multiple distributed databases, a data store, a data lake, or an emergency backup database. In some examples, the disk drive 640 may be an example of one or more components described with reference to FIG. 1.

GPU 645 may be configured to store graphics-related data. The GPU 645 may store and manage data related to graphics and video processing. In some examples, the GPU 645 may be an example of or a component of a graphics card. The GPU 645 may use components of the memory 630, including the RAM, for temporary storage. For example, the GPU 645 may move data from the RAM of the memory 630 to the GPU 645 for graphics and video processing.

The communication interface 650 may enable the agent device 605 to exchange information (e.g., input information, output information, or both) with other systems or devices (not shown). For example, the communication interface 650 may enable the agent device 605 to connect to a network (e.g., a target network 110 as described herein). The communication interface 650 may include one or more wireless network interfaces, one or more wired network interfaces, or any combination thereof.

The autonomous pentesting program 620 may be an example of a program of an autonomous pentesting service that is installed on the memory 630 of the agent device 605. The autonomous pentesting program 620 may execute an autonomous pentest of a network accessed by the agent device 605, such as accessed via the communication interface 650. That is, the autonomous pentesting program 620 may be configured to perform an autonomous pentest as described herein, including an autonomous pentest involving autonomous pentesting.

The EDR agent manager 655 may support autonomous pentesting in accordance with examples as disclosed herein. For example, the EDR agent manager 655 may be configured as or otherwise support a means for executing an autonomous pentest of a network, where executing the autonomous pentest includes: performing one or more autonomous pentesting operations along an attack path and accessing one or more endpoints of multiple endpoints of the network via the attack path. The EDR agent manager 655 may be configured as or otherwise support a means for performing a deployment assessment procedure on the one or more endpoints accessed via the attack path, where performing the deployment assessment procedure includes: identifying, for an endpoint of the one or more endpoints, one or more parameters of the endpoint, one or more attributes of an environment surrounding the endpoint, and a complexity level associated with accessing the endpoint via the one or more autonomous pentesting operations along the attack path. The EDR agent manager 655 may be configured as or otherwise support a means for deploying, based on the deployment assessment procedure, an EDR agent at the endpoint, the EDR agent having an aggressiveness that is configured in accordance with the one or more parameters of the endpoint, the one or more attributes of the environment surrounding the endpoint, and the complexity level associated with accessing the endpoint.

By including or configuring the EDR agent manager 655 in accordance with examples as described herein, the agent device 605 may support techniques for improved network security.

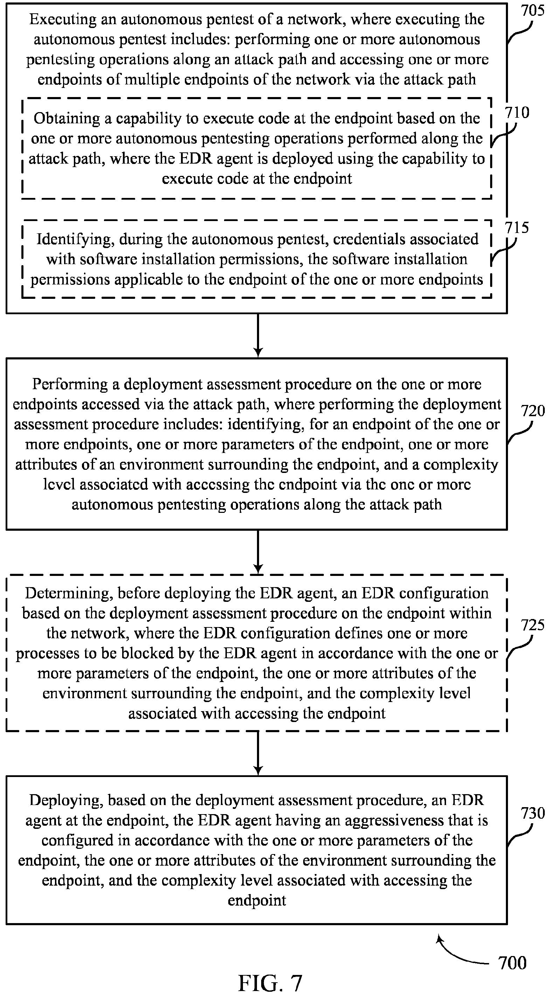

**FIG. 7** shows a flowchart illustrating a method 700 that supports deploying EDR agents based on autonomous pentest information in accordance with aspects of the present disclosure. The operations of the method 700 may be implemented by an agent device 605 or its components as described herein. In some examples, an agent device may execute a set of instructions to control the functional elements of the agent device to perform the described functions. Additionally, or alternatively, the agent device may perform aspects of the described functions using special-purpose hardware.

At 705, the method 700 may include executing an autonomous pentest of a network, where executing the autonomous pentest includes: performing one or more autonomous pentesting operations along an attack path and accessing one or more endpoints of multiple endpoints of the network via the attack path. In some examples, at 710, the method 700 may include obtaining a capability to execute code at the endpoint based on the one or more autonomous pentesting operations performed along the attack path, where the EDR agent is deployed using the capability to execute code at the endpoint. Additionally, or alternatively, at 715, the method 700 may include Identifying, during the autonomous pentest, credentials associated with software installation permissions, the software installation permissions applicable to the endpoint of the one or more endpoints.

At 720, the method 700 may include performing a deployment assessment procedure on the one or more endpoints accessed via the attack path, where performing the deployment assessment procedure includes: identifying, for an endpoint of the one or more endpoints, one or more parameters of the endpoint, one or more attributes of an environment surrounding the endpoint, and a complexity level associated with accessing the endpoint via the one or more autonomous pentesting operations along the attack path.

At 725, the method 700 may include determining, before deploying the EDR agent, an EDR configuration based on the deployment assessment procedure on the endpoint within the network, where the EDR configuration defines one or more processes to be blocked by the EDR agent in accordance with the one or more parameters of the endpoint, the one or more attributes of the environment surrounding the endpoint, and the complexity level associated with accessing the endpoint.

At 730, the method 700 may include deploying, based on the deployment assessment procedure, an EDR agent at the endpoint, the EDR agent having an aggressiveness that is configured in accordance with the one or more parameters of the endpoint, the one or more attributes of the environment surrounding the endpoint, and the complexity level associated with accessing the endpoint.

The following provides an overview of aspects of the present disclosure:
Aspect 1: A method for autonomous pentesting, comprising: executing an autonomous pentest of a network, wherein executing the autonomous pentest comprises: performing one or more autonomous pentesting operations along an attack path; and accessing one or more endpoints of a plurality of endpoints of the network via the attack path; performing a deployment assessment procedure on the one or more endpoints accessed via the attack path, wherein performing the deployment assessment procedure comprises: identifying, for an endpoint of the one or more endpoints, one or more parameters of the endpoint, one or more attributes of an environment surrounding the endpoint, and a complexity level associated with accessing the endpoint via the one or more autonomous pentesting operations along the attack path; and deploying, based at least in part on the deployment assessment procedure, an EDR agent at the endpoint, the EDR agent having an aggressiveness that is configured in accordance with the one or more parameters of the endpoint, the one or more attributes of the environment surrounding the endpoint, and the complexity level associated with accessing the endpoint.
Aspect 2: The method of aspect 1, further comprising: obtaining a capability to execute code at the endpoint based at least in part on the one or more autonomous pentesting operations performed along the attack path, wherein the EDR agent is deployed using the capability to execute code at the endpoint.
Aspect 3: The method of aspect 2, wherein deploying the EDR agent comprises: remotely executing code at the endpoint using the capability obtained based at least in part on the one or more autonomous pentesting operations, wherein executing the code deploys the EDR agent at the endpoint.
Aspect 4: The method of any of aspects 1 through 3, further comprising: identifying, during the autonomous pentest, credentials associated with software installation permissions, the software installation permissions applicable to the endpoint of the one or more endpoints.
Aspect 5: The method of aspect 4, wherein deploying the EDR agent comprises: installing the EDR agent at the endpoint using the credentials and based at least in part on the software installation permissions associated with the credentials.
Aspect 6: The method of any of aspects 1 through 5, wherein the complexity level associated with accessing the endpoint is further based at least in part on a quantity of occurrences of access to the endpoint in one or more attack paths of one or more autonomous pentests of the network, the one or more attack paths comprising the attack path.
Aspect 7: The method of any of aspects 1 through 6, further comprising: identifying, during the autonomous pentest of the network, a misconfiguration of a second EDR agent at the endpoint, wherein: accessing the endpoint of the one or more endpoints is based at least in part on the misconfiguration; and the EDR agent replaces the second EDR agent and is configured to address the misconfiguration used to access the endpoint during the autonomous pentest.
Aspect 8: The method of any of aspects 1 through 7, further comprising: determining, before deploying the EDR agent, an EDR configuration based at least in part on the deployment assessment procedure on the endpoint within the network, wherein the EDR configuration defines one or more processes to be blocked by the EDR agent in accordance with the one or more parameters of the endpoint, the one or more attributes of the environment surrounding the endpoint, and the complexity level associated with accessing the endpoint.
Aspect 9: The method of any of aspects 1 through 8, further comprising: executing a second autonomous pentest of the network after the EDR agent is deployed at the endpoint, wherein executing the second autonomous pentest comprises: performing one or more second autonomous pentesting operations targeting the endpoint along the attack path; and verifying a configuration of the EDR agent based at least in part on failing to access the endpoint via the attack path.
Aspect 10: The method of any of aspects 1 through 9, further comprising: performing one or more communications with one or more security platforms associated with the network, wherein the one or more communications notify the one or more security platforms of the EDR agent deployed at the endpoint and configure the one or more security platforms to manage the EDR agent.
Aspect 11: The method of any of aspects 1 through 10, further comprising: receiving one or more inputs indicative of a priority level associated with the endpoint, wherein the deployment assessment procedure for the endpoint is further based at least in part on the priority level.
Aspect 12: The method of any of aspects 1 through 11, further comprising: detecting activity at the endpoint and via the EDR agent; and transmitting an indication of the activity detected at the endpoint to a management console of the network based at least in part on the EDR agent being configured to communicate with the management console of the network.
Aspect 13: The method of any of aspects 1 through 12, wherein the EDR agent is configured to record one or more occurrences of activity associated with a predicted attack on the network.
Aspect 14: The method of any of aspects 1 through 13, wherein the EDR agent is configured to detect and block one or more processes associated with a predicted attack on the network and to transmit one or more notifications in accordance with detection of the one or more processes to a user of the network.
Aspect 15: An apparatus for autonomous pentesting, comprising: one or more memories storing processor-executable code; and one or more processors coupled with the one or more memories and individually or collectively operable to execute the code to cause the apparatus to perform a method of any of aspects 1 through 14.
Aspect 16: A non-transitory computer-readable medium storing code for autonomous pentesting, the code comprising instructions executable by one or more processors to perform a method of any of aspects 1 through 14.
Aspect 17: An apparatus for autonomous pentesting, comprising at least one means for performing a method of any aspects 1 through 14.

It should be noted that these methods describe examples of implementations, and that the operations and the steps may be rearranged or otherwise modified such that other implementations are possible. In some examples, aspects from two or more of the methods may be combined. For example, aspects of each of the methods may include steps or aspects of the other methods, or other steps or techniques described herein.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

Information and signals described herein may be represented using any of a variety of different technologies and techniques. For example, data, instructions, commands, information, signals, bits, and symbols that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration). The functions of each unit may also be implemented, in whole or in part, with instructions embodied in a memory, formatted to be executed by one or more general or application-specific processors.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable ROM (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

As used herein, including in the claims, the article "a" before a noun is openended and understood to refer to "at least one" of those nouns or "one or more" of those nouns. Thus, the terms "a," "at least one," "one or more," "at least one of one or more" may be interchangeable. For example, if a claim recites "a component" that performs one or more functions, each of the individual functions may be performed by a single component or by any combination of multiple components. Thus, the term "a component" having characteristics or performing functions may refer to "at least one of one or more components" having a particular characteristic or performing a particular function. Subsequent reference to a component introduced with the article "a" using the terms "the" or "said" may refer to any or all of the one or more components. For example, a component introduced with the article "a" may be understood to mean "one or more components," and referring to "the component" subsequently in the claims may be understood to be equivalent to referring to "at least one of the one or more components."

In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A method (700) for autonomous pentesting, comprising:
executing (705) an autonomous pentest (405) of a network (110), wherein executing (705) the autonomous pentest (405) comprises:
performing one or more autonomous pentesting operations along an attack path (430); and
accessing one or more endpoints (410) of a plurality of endpoints of the network (110) via the attack path (430);
performing (720) a deployment assessment procedure (440) on the one or more endpoints accessed via the attack path (430), wherein performing (720) the deployment assessment procedure (440) comprises:
identifying, for an endpoint (410) of the one or more endpoints (410), one or more parameters of the endpoint (410), one or more attributes of an environment (505) surrounding the endpoint (410), and a complexity level associated with accessing the endpoint (410) via the one or more autonomous pentesting operations along the attack path (430); and
deploying (730), based at least in part on the deployment assessment procedure (440), an endpoint detection and response, EDR, agent (445) at the endpoint (410), the EDR agent (445) having an aggressiveness that is configured in accordance with the one or more parameters of the endpoint (410), the one or more attributes of the environment (505) surrounding the endpoint (410), and the complexity level associated with accessing the endpoint (410).

2. The method (700) of claim 1, further comprising:
obtaining (710) a capability to execute code at the endpoint (410) based at least in part on the one or more autonomous pentesting operations performed along the attack path (430), wherein the EDR agent (445) is deployed using the capability to execute code at the endpoint (410).

3. The method (700) of claim 2, wherein deploying (730) the EDR agent (445) comprises:
remotely executing code at the endpoint (410) using the capability obtained based at least in part on the one or more autonomous pentesting operations, wherein executing the code deploys the EDR agent (445) at the endpoint (410).

4. The method (700) of claim 1, further comprising:
identifying (715), during the autonomous pentest (405), credentials associated with software installation permissions, the software installation permissions applicable to the endpoint (410) of the one or more endpoints (410).

5. The method (700) of claim 4, wherein deploying (730) the EDR agent (445) comprises:
installing the EDR agent (445) at the endpoint (410) using the credentials and based at least in part on the software installation permissions associated with the credentials.

6. The method (700) of claim 1, wherein the complexity level associated with accessing the endpoint (410) is further based at least in part on a quantity of occurrences of access to the endpoint (410) in one or more attack paths of one or more autonomous pentests of the network (110), the one or more attack paths comprising the attack path (430).

7. The method (700) of claim 1, further comprising:
identifying, during the autonomous pentest (405) of the network (110), a misconfiguration of a second EDR agent at the endpoint (410), wherein:
accessing the endpoint (410) of the one or more endpoints (410) is based at least in part on the misconfiguration; and
the EDR agent (445) replaces the second EDR agent and is configured to address the misconfiguration used to access the endpoint (410) during the autonomous pentest (405).

8. The method (700) of claim 1, further comprising:
determining (725), before deploying the EDR agent (445), an EDR configuration (450) based at least in part on the deployment assessment procedure (440) on the endpoint (410) within the network (110), wherein the EDR configuration (450) defines one or more processes to be blocked by the EDR agent (445) in accordance with the one or more parameters of the endpoint (410), the one or more attributes of the environment (505) surrounding the endpoint (410), and the complexity level associated with accessing the endpoint (410).

9. The method (700) of claim 1, further comprising:
executing a second autonomous pentest of the network after the EDR agent (445) is deployed at the endpoint (410), wherein executing the second autonomous pentest comprises:
performing one or more second autonomous pentesting operations targeting the endpoint (410) along the attack path (430); and
verifying a configuration (450) of the EDR agent (445) based at least in part on failing to access the endpoint (410) via the attack path (430).

10. The method (700) of claim 1, further comprising:
performing one or more communications with one or more security platforms associated with the network (110), wherein the one or more communications notify the one or more security platforms of the EDR agent (445) deployed at the endpoint (410) and configure the one or more security platforms to manage the EDR agent (445).

11. The method (700) of claim 1, further comprising:
receiving one or more inputs indicative of a priority level associated with the endpoint (410), wherein the deployment assessment procedure (440) for the endpoint (410) is further based at least in part on the priority level.

12. The method (700) of claim 1, further comprising:
detecting activity at the endpoint (410) and via the EDR agent (445); and
transmitting an indication of the activity detected at the endpoint (410) to a management console of the network (110) based at least in part on the EDR agent (445) being configured to communicate with the management console of the network (110).

13. The method (700) of claim 1, wherein the EDR agent (445) is configured to record one or more occurrences of activity associated with a predicted attack on the network (110).

14. The method (700) of claim 1, wherein the EDR agent (445) is configured to detect and block one or more processes associated with a predicted attack on the network (110) and to transmit one or more notifications in accordance with detection of the one or more processes to a user of the network (110).

15. An apparatus (605) for autonomous pentesting, comprising:
one or more memories (630) storing code; and
one or more processors (635) coupled with the one or more memories (630) and individually or collectively operable to execute the code to cause the apparatus (605) to:
execute (705) an autonomous pentest (405) of a network (110), wherein, to execute the autonomous pentest (405), the one or more processors (635) are configured to cause the apparatus (605) to:
perform one or more autonomous pentesting operations along an attack path (430); and
access one or more endpoints (410) of a plurality of endpoints of the network (110) via the attack path (430);
perform (720) a deployment assessment procedure (440) on the one or more endpoints (410) accessed via the attack path (430), wherein, to perform the deployment assessment procedure (440), the one or more processors (635) are configured to cause the apparatus (605) to:
identify, for an endpoint (410) of the one or more endpoints (410), one or more parameters of the endpoint (410), one or more attributes of an environment (505) surrounding the endpoint (410), and a complexity level associated with accessing the endpoint (410) via the one or more autonomous pentesting operations along the attack path (430); and
deploy (730), based at least in part on the deployment assessment procedure (440), an endpoint detection and response, EDR, agent (445) at the endpoint (410), the EDR agent (445) having an aggressiveness that is configured in accordance with the one or more parameters of the endpoint (410), the one or more attributes of the environment (505) surrounding the endpoint (410), and the complexity level associated with accessing the endpoint (410).
